# EUROPÄISCHE PATENTSCHRIFT

(11) **EP 1 575 718 B1**
(45) Veröffentlichungstag und Bekanntmachung des Hinweises auf die Patenterteilung: **10.05.2006**
(21) Anmeldenummer: 03789207.2
(22) Anmeldetag: 10.12.2003
(51) Int. Cl.: B21B 1/34

(54) **VERFAHREN UND ANLAGE ZUM WARMWALZEN VON BÄNDERN MIT EINEM STECKELWALZGERÜST**
METHOD AND INSTALLATION FOR HOT-ROLLING STRIPS USING A STECKEL ROLLING FRAME
PROC D ET INSTALLATION POUR LAMINER CHAUD DES FEUILLARDS AU MOYEN D'UNE CAGE DE LAMINOIR STECKEL

(30) Priorität: 14.12.2002 DE 10258498; 05.12.2003 DE 10357272
(43) Veröffentlichungstag der Anmeldung: 21.09.2005
(73) Patentinhaber: SMS Demag Aktiengesellschaft, 40237 Düsseldorf (DE)
(72) Erfinder: KIRSTEIN, Hartmut, 42659 Solingen (DE); REICHEL, Heiko, 57319 Bad Berleburg (DE)
(74) Vertreter: Valentin, Ekkehard
(86) Internationale Anmeldenummer: PCT/EP2003/014001
(87) Internationale Veröffentlichungsnummer: WO 2004/054730

(56) Entgegenhaltungen:
- EP-A- 0 088 201
- EP-A- 0 593 398
- EP-A- 0 829 322

## Beschreibung

Die Erfindung betrifft ein Verfahren und eine Anlage zum Warmwalzen von Bändern, insbesondere aus Stahl, wobei das Walzgut in einem Steckel-Walzgerüst gewalzt wird. Hierbei wird das Band reversierend gewalzt und zwischen zwei
Ofenhaspeln, die jeweils zu einer Seite in Förderrichtung des Steckel-Walzgerüstes angeordnet sind, mittels Treibern gefördert. Die Treiber sind zwischen dem jeweiligen Ofenhaspel und dem Steckel-Walzgerüst angeordnet.

Eine Anlage mit einem Steckel-Walzgerüst ist beispielsweise aus der DE 195 49 208 A1 bekannt. Nach dem Stand der Technik wird das Walzgut in mindestens einem Reversier-Vorgerüst in einer Anzahl von Vorstichen zu einem Vorband gewalzt und dann über einen Zwischen-Rollgang in ein Steckel-Fertiggerüst transportiert. Im Steckel-Fertiggerüst wird das Band in einer Anzahl von Stichen zum Fertigband von vorgegebener Dicke fertiggewalzt. Danach wird das Band ggfs. forciert gekühlt, in einem Fertigband-Haspel aufgewickelt und zur weiteren Bearbeitung abtransportiert.

Zwischen dem Vorgerüst bzw. dem Rollgang und dem Fertiggerüst ist eine Schopfschere angeordnet, die der Vorstraße zugeordnet ist. Mittels dieser Schopfschere werden die beim Vorwalzen entstandenen unregelmäßigen Fuß- und Kopfenden des Vorbandes abgetrennt. Das unmittelbar nach der Vorstraße geschopfte Band wird dann im Steckelwalzgerüst weiter heruntergewalzt.

Hierbei bilden sich erneut aufgrund des Walzprozesses unregelmäßige Bandenden bzw. Zungen, die das Einfädeln für den Wickelprozess in dem Ofenhaspel stören. Insbesondere bei sehr dünn ausgewalzten Bändern und damit stark ausgeprägter ungünstiger Bandzungenbildung wirken sich diese negativ auf den Wickelprozess aus. Eine Korrektur der Bandenden während des Walzvorgangs ist im Bereich des Fertiggerüstes bei herkömmlichen Steckel-Walzgerüsten nicht möglich.

Aus der EP 0 088 201 B1 ist ein Reversier-Walzwerk mit zwei Haspeln bekannt, bei dem hinter einem zweiten Fertiggerüst und dem Reversierhaspel eine Schopfschere angeordnet ist. Die Schopfschere besteht aus einer unteren und oberen Messerwalze, die mit einer an die Durchlaufgeschwindigkeit des Walzgutes angepassten Umfangsgeschwindigkeit angetrieben werden, so dass die Messer während des Schnittes mit dem Walzgut mitbewegt werden. Auf der unteren Messerwalze ist eine Stützrolle für das Warmband drehbar gelagert, um im Bereich der Schopfschere eine hinsichtlich des Rollgangs gleichwertige Führung für das Warmband zu erhalten. Werden die Messerwalzen für einen Schopfvorgang angetrieben, so wird die Stützrolle durch Drehung der Messerwalze um ihre Achse aus dem Bereich des Warmbandes nach unten weggedreht, um Platz für den Messereingriff zu machen. Nach einer vollen Umdrehung der Messerwalze wird wiederum die Arbeitslage der Stützrolle erreicht. Die Funktionen des Schneidens und des Stützens werden demnach durch Drehen der Messerwalze um ihre Messerwalzenachse erreicht. Die Reversierhaspel sind keine Ofenhaspel.

Aus der EP 0 593 398 A1 ist ein Steckelwalzgerüst zum Warmwalzen bekannt, wobei zwischen zwei Haspelöfen und einem Walzgerüst eine Einheit aus jeweils einem Treiber und einer Schopfschere angeordnet ist. Die Schopfschere umfasst nicht rotierende obere und untere Scherenmesser. Die Scheren können die Bandenden nur abschneiden (schopfen), wenn das Walzgut stillsteht. Die erforderliche Stillstandzeit wirkt sich ungünstig auf die Bandtemperatur aus, die zum Erzeugen dünner Banddicken erforderlich ist.

Ausgehend hiervon liegt der Erfindung die Aufgabe zugrunde, ein Verfahren sowie eine Anlage gattungsgemäßer Art bereitzustellen, mit der insbesondere dünne, warme, Bänder problemlos und ohne Zeitverlust geschopft werden können.

Diese Aufgabe wird mittels des Verfahrens nach Anspruch 1 und der Anlage nach Anspruch 3 gelöst. Vorteilhafte Weiterentwicklungen sind in den Unteransprüchen beschrieben.

Kerngedanke der Erfindung ist es, dass das Band während des Reversierwalzens im Steckel-Walzgerüst mittels einer einzigen fliegenden Schopfschere, die zwischen einem Treiber und dem Steckel-Walzgerüst angeordnet ist, geschopft wird. Der fliegende Korrektur-Schopfschnitt wird im Bereich eines Steckelwalz-Gerüstes mit nur einer einzigen Schere ermöglicht. Dies weist den Vorteil auf, dass die insbesondere bei dünnen Banddicken entstehenden unregelmäßigen Bandenden bzw. Zungen innerhalb des Walz-Prozesses entfernt werden können und der Wickelprozess in den Ofenhaspeln bzw. beim Fertighaspeln nicht gestört wird.

Da die Schopfschere in den Reversierprozess des Steckelwalzens integriert ist, kann bereits mittels einer einzigen Schere in beiden Bandlaufrichtungen geschopft werden. Insbesondere, wenn Endbanddicken von unter etwa 2 mm gewalzt werden, wird das jeweilige Bandende, das in den Ofenhaspel eintritt bzw. in Richtung dieses Ofenhaspels und dem davorliegenden Treiber läuft, durch die integrierte Schopfschere geschopft, so dass der Prozess reibungslos und ohne Ausfälle im Ofenhaspel ablaufen kann.

Bei der Schopfschere selbst handelt es sich um eine fliegende Schere, so dass während des Walzens bei weitgehendem Beibehalten der Walzgeschwindigkeit geschopft werden kann. Aufgrund des fliegenden Schnitts ergibt sich beim Schneiden fast kein Zeitverlust, so dass das Band wenig abkühlt wird bzw. günstige Bandtemperaturen erhalten bleiben.

Da die vorgeschlagene Schopfschere im Bereich des Steckel-Walzgerüstes und damit bei bereits dünnerem Band eingesetzt wird, reicht eine Schere von im Verhältnis zu der bekannten Schere in der Vorwalzstraße kleinerem Format. Weil sich die störenden Bandenden erst nach mehreren Rerversierstichen im Steckel-Fertiggerüst bilden, kann die Schere zum Schneiden geringer Banddikken und damit relativ leicht ausgelegt werden.

Neben einer Prozesskette, wie sie aus der DE 195 49 208 A1 bekannt ist, kann eine Anlage mit Steckelwalzgerüst und integrierter Schopfschere zwischen einem Ofenhaspel und den Rollen des Treibers auch in anderen alternativen Prozessketten eingesetzt werden, wie sie beispielsweise aus der DE 40 09 860 C2 bekannt sind. Die hier beschriebene Prozesskette umfasst eine CSP (Compact Strip Production-) Stranggießanlage mit einem nachgeordneten Ausgleichsofen, in dem bandförmiges Vormaterial in Vorbandlängen einem Temperaturausgleich bzw. einer Erwärmung auf Walztemperatur unterzogen werden. Dem Ausgleichsofen ist eine Schere sowie ein Walzwerk in Bandförderrichtung nachgeordnet, das sich aus einem Reversier-Steckelgerüst oder einer Tandem-Fertigstraße zusammensetzt. Die zuvor erwähnte Schere dient in dieser Prozesskette zum Zerkleinern nicht walzfähigen Materials und arbeitet nicht als Schopfschere.

Insbesondere bei dem wegen niedriger Investitionskosten vorteilhaften Einsatz eines Steckel-Walzgerüstes als Fertig-Walzwerk in dieser Prozesskette bietet die fliegende Schopfschere im Bereich des Steckel-Walzgerüstes eine gute Möglichkeit, die während des Walzprozesses entstehenden unregelmäßigen Bandenden zu korrigieren und Störungen des Wickelprozesses in den Ofenhaspeln zu vermeiden.

Nach einer besonders bevorzugten Weiterbildung ist die Schopfschere, die zwischen einem Treiber und dem Steckel-Walzgerüst angeordnet ist, als Trommelmesser-Schopfschere ausgebildet mit einer sowohl oberen als auch unteren anstellbaren Messertrommel zum fliegenden Schnitt des Bandmaterials, wobei die jeweiligen Messertrommel, insbesondere beide, zwischen einer vom durchlaufenden Bandmaterial entfernten Position während des Walzbetriebs und einer Schneidposition verstellbar sind.

Eine derartige Schere wird in den Prozessweg zwischen Steckel-Walzgerüst und einem Ofenhaspel bzw. Wickelofen eingebaut. Beide Messertrommeln befinden sich während des Walzens in zurückgezogener Stellung mit weitem Abstand zwischen Messertrommel und Band und werden erst zum Schnitt in Schneidposition gebracht. Dadurch sind die Messertrommeln während der Walzposition nicht so dicht am warmen Band angeordnet. Die Wärmebelastung der Messertrommeln ist daher erheblich vermindert.

Aufgrund des weiten Messertrommelabstandes zum Band können auch fehlerbehaftete Bänder, beispielsweise Bänder mit einem Walzski oder mit Bandwellen, ungehindert die Schere durchlaufen. Beschädigungen der Bandober- oder -unterseite durch Kontakt mit den Messertrommeln werden wirkungsvoll verhindert.

Zudem können die Messertrommeln aufgrund des Abstandes vom Band nach einer bevorzugten Ausführungsform ständig rotieren, so dass die Wärmebelastung auf den Trommelumfang gleichmäßig verteilt wird.

Auch wenn die Messertrommeln nicht ständig rotieren, werden sie, bevor der Schnitt erfolgt, rechtzeitig in Gang gesetzt und mit der Bandgeschwindigkeit synchronisiert. Dadurch kann die Scheren-Antriebsleistung niedrig gehalten werden. Es ist nicht notwendig, die Messertrommeln innerhalb eines kleinen Drehwinkels (dieser liegt üblicherweise zwischen 180-270°) auf Bandgeschwindigkeit zu beschleunigen, was mit hoher Motorleistung verbunden ist.

Nach einer bevorzugten Ausführungsform werden während des Walzbetriebs Wärmeschutzschirme in den Zwischenraum zwischen den anstellbaren Messertrommeln und dem Band eingeschwenkt. Diese Maßnahme vermindert zusätzlich die Wärmebelastung der Messertrommeln.

Vorteilhafterweise ist der untere Wärmeschutzschirm mit einer oder mehreren Tragrollen ausgerüstet, damit das Band im Walzbetrieb während des Durchlaufs rollend abgestützt wird. Die jeweilige Tragrolle am unteren Wärmeschutzschirm bzw. -schild ist stabil ausgebildet und ist vorzugsweise angetrieben, damit das durchlaufende und abgestützte Band an der Unterseite nicht beschädigt wird. Der Antrieb dieser Tragrolle könnte von außen - außerhalb des Scherengehäuses - über eine Gelenkwelle erfolgen. Die Wärmeschutzschirme, die wegen der hohen Wärmebelastung zwischen den Messertrommeln einem hohen Verschleiß unterliegen, sind vorzugsweise leicht auswechselbar gestaltet. Sie werden beispielsweise im Rahmen eines Messerwechsels ebenfalls gewechselt.

Nach einer Weiterentwicklung der Anlage werden die Messertrommeln von außen mit einem Kühlmittel, wie Wasser, gekühlt. Der obere Wärmeschutzschirm dient in einem solchen Fall als Wasser-Auffangrinne, so dass das Kühlwasser für die obere Messertrommel nicht in Kontakt mit dem Band kommt und die Bandtemperatur nicht unnötig absinkt. Es ist eine permanente Kühlung der Messertrommeln während des Banddurchlaufs durch die Schere möglich.

Vorzugsweise ist der jeweilige schwenkbare Wärmeschutzschirm auf der Achse der jeweiligen Messertrommel gelagert. Da die Wärmeschutzschirme keinen zu großen mechanischen Belastungen ausgesetzt werden, sind zur Anpassung an die Zapfendurchmesser der Messertrommeln große Lager mit geringer Tragfähigkeit ausreichend.

Neben der Lagerung der Wärmeschutzschirme an den Messertrommelzapfen ist auch deren Befestigung schwenkbar am Scherenrahmen oder den verlängerten Führungshebeln für die Messertrommeln möglich.

Die beanspruchte Anstellung der Messertrommeln erfolgt vorzugsweise über ein unteres und oberes Kniehebelsystem, die nach einer Weiterbildung in einem geschlossenen Scherenrahmen zusammengefasst sind. Der Scherenrahmen nimmt die Schneidkraft auf und dient gleichzeitig als Haltepunkt für die Anlenkung der Messertrommeln in Führungshebeln.

Das Kniehebelsystem gewährleistet in seiner gestreckten Lage eine formsteife, genaue Lage der Messertrommeln für den Schnitt. Für die Anstellung werden relativ kleine Kräfte benötigt, weil nur die Messertrommeln bewegt werden müssen. Die Schneidkraft tritt erst in der Endlage der Kniehebel auf. Die Endlage wird erreicht, kurz bevor die Scherenmesser das Bandmaterial kontaktieren.

Das Wegschwenken der Wärmeschutzschirme vor dem Schnitt kann über den Kniehebelantrieb selbst vorgenommen werden und ist somit zwangsläufig. Es können auch separate Hydraulikzylinder zum Einsatz kommen, die eine zeitlich besser steuerbare Betätigung ermöglichen. Darüber hinaus bietet die hydraulische Betätigung den Vorteil, die Wärmeschutzschirme nach beiden Seiten zu schwenken, so dass dem einlaufenden Bandende immer ein Einführtrichter gegenübersteht.

Zudem wird die Anlage durch einen speziellen Rollgang weitergebildet. Dieser setzt sich aus zwei Schwenkrollgängen bzw. -einheiten zusammen, die am Eingang und am Ausgang der Schere zur Förderung der Bandes angeordnet sind. Je nach Bandlaufrichtung wird jeweils die Rollgangeinheit, die hinter den Messertrommeln liegt, so hochgeschwenkt, dass das abgeschnittene Schopfende frei nach unten fallen kann und eine Schopfendenableitung unproblematisch möglich ist. Sobald dies erfolgt ist, wird die Rollgangeinheit weiter durchgeschwenkt, d.h. in gleicher Schwenkrichtung wieder in die Horizontale geschwenkt. Wenn dieser Schwenkvorgang beendet wird, kann das nachfolgende geschopfte Bandende abgefangen und für den Weiterlauf unterstützt werden.

Es empfiehlt sich, die Rollen der Schwenkrollgangeinheiten selbstständig anzutreiben, um eine Beschädigung der Bandunterseite zu vermeiden. Der Rollenantrieb kann über das zentrale Schwenklager der jeweiligen Einheit eingeleitet werden. Die Verteilung des Antriebs kann über Kettentriebe oder Stirnräder mit Zwischenrädern vorgenommen werden. Für den Schwenkantrieb des Rollgangs bzw. der Rollgangeinheiten kann ein Hydraulikmotor oder ein Elektromotor mit Zwischengetriebe eingesetzt werden.

Als Variante zu den Schwenkrollgängen können auch versteifte, schwenkbare Führungsplatten in gleicher Funktion zur Schopfendenableitung bzw. zum Abfangen des geschopften Bandendes eingesetzt werden.

Die Erfindung weist den Vorteil auf, dass die insbesondere bei dünnen Banddicken entstehenden unregelmäßigen Bandenden bzw. Zungen sowohl am Kopf- als auch Fußende eines Bandes innerhalb des Walz-Prozesses entfernt werden können und der Wickelprozess in den Ofenhaspeln bzw. beim Fertighaspeln nicht gestört wird. Die unregelmäßigen Bandenden (Bandkopf/Bandfuß) können während des Walzvorgangs durch Schopfschnitte mittels der fliegenden Schopfschere so korrigiert werden, dass diese einwandfrei in die für den Steckel-Walzprozess typischen Ofenhaspeln, insbesondere in den Auffangschlitz der Haspeltrommeln, eingefädelt werden.

Von der Erfindung eingeschlossen ist die Verwendung von mehrgerüstigen Steckel-Walzgerüsten.

Weitere Einzelheiten, Merkmale und Vorteile der Erfindung ergeben sich aus der nachstehenden Erläuterung eines in den Zeichnungen dargestellten Ausführungsbeispiels: Es zeigen:
- Fig. 1: schematisch ein Steckel-Walzgerüst mit einer Schopfschere zwischen einem Treiber und dem Steckel-Walzgerüst;
- Fig. 2: schematisch eine konventionelle Anlage mit Vorwalzgerüst mit nachgeordneter Schopfschere und sich anschließendem Steckel-Walzgerüst;
- Fig. 3: die schematische Darstellung einer Trommelmesser-Schopfschere mit anstellbarer oberer und unterer Messertrommel mit einer ersten Ausführungsform eines Kniehebelantriebs;
- Fig. 4: eine Schopfschere nach Fig. 3 mit einer zweiten Ausführungsform des Kniehebelantriebs;
- Fig. 5: eine Schopfschere nach Fig. 3 mit einer dritten Ausführungsform des Kniehebelantriebs;
- Fig. 6: eine Schopfschere nach Fig. 3 mit einer vierten Ausführungsform des Kniehebelantriebs;
- Fig. 7: eine Schopfschere mit einem Verschwenkantrieb der Wärmeschutzschirme für die Messertrommeln durch das Kniehebelsystem;
- Fig. 8: eine Schopfschere mit einem hydraulischen Verschwenkantrieb für die Wärmeschutzschirme;
- Fig. 9: eine Schopfschere mit verschwenktem Schwenkrollgang auf der linke Seite;
- Fig. 10: eine Schopfschere mit verschwenktem Schwenkrollgang auf der rechten Seite.

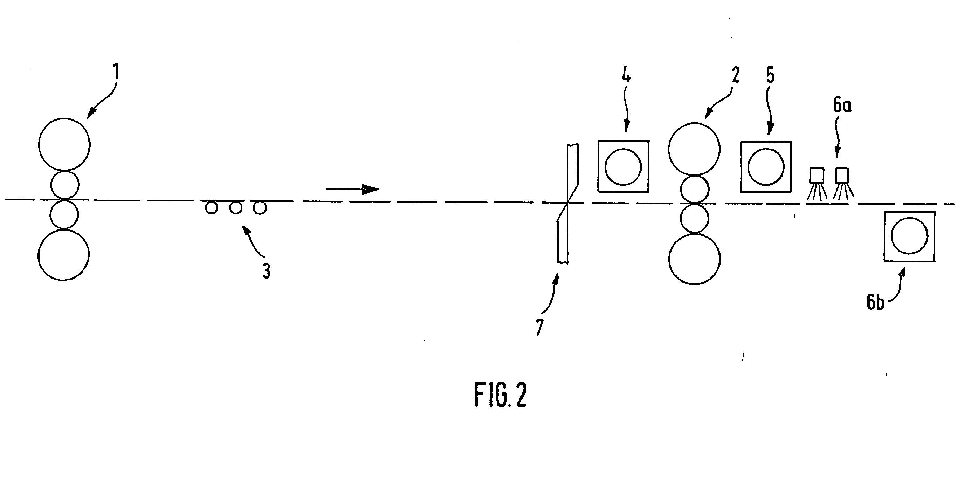

Die in der Fig. 2 gezeigte konventionelle Anlage zum Warmwalzen von Bändern umfasst mindestens ein Reversiervorgerüst 1 zum Vorwalzen eines Vorbandes und mindestens ein Steckel-Fertiggerüst 2 zum Reduzieren des Vorbandes zum Fertigband. Beide Anlagenteile (1, 2) sind durch einen Zwischenrollgang 3 miteinander verbunden. Das Steckel-Fertiggerüst 2, hier ein Reversierquarto-Gerüst, umfasst zwei Haspelöfen 4, 5, in denen das Band aufgewickelt und gleichzeitig auf Walztemperatur gehalten wird. Nach Beendigung des Fertigwalzens durchläuft das Band eine Endeinheit 6, die hier aus einer Kühlstrecke 6a, beispielsweise einer Laminar-Kühlstrecke, und einer weiteren Haspeleinrichtung 6b besteht. Das Band wird zum Coil aufgewickelt, um zur Weiterverarbeitung, beispielsweise zum Kaltwalzen oder Beschichten oder zum Versand transportabel zu sein. In Bandförderrichtung (Pfeil) vor dem Steckel-Fertiggerüst 2 ist eine Schopfschere 7 zum Schopfen des Vorbandes angeordnet. Die Schopfschere 7 ist entsprechend der Vorbanddicke, die etwa bei 30 mm liegen kann, ausgelegt und weist eine entsprechende Größe für eine benötigte Trennwirkung des Bandes auf.

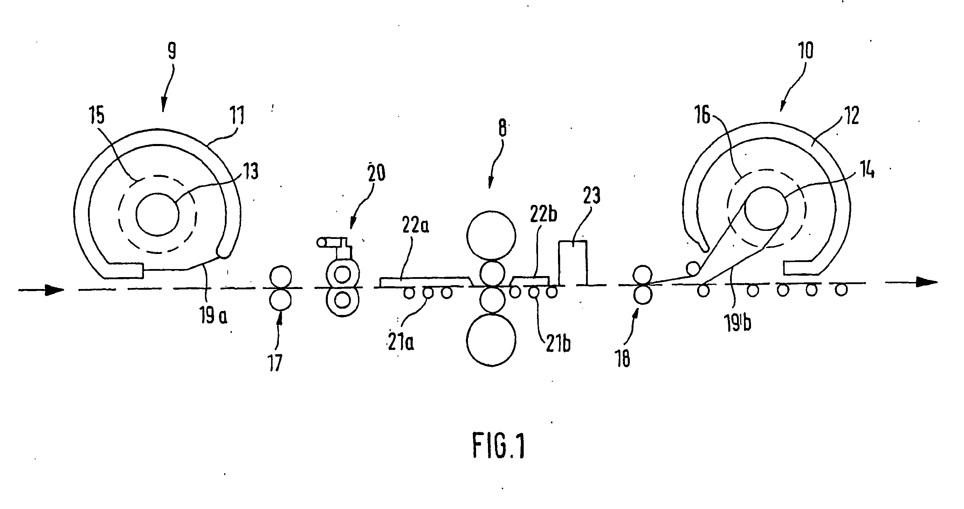

Fig. 1 zeigt ein eingerüstiges Steckel-Walzgerüst 8 und kann, muss aber nicht, in einer Prozesskette, wie sie Fig. 2 zeigt, integriert sein. Das Steckel-Walzgerüst 8 ist in diesem Fall ebenfalls ein Reversierquarto-Gerüst. Ebenfalls von der Erfindung eingeschlossen ist die Verwendung von mehrgerüstigen Steckel-Walzwerken. In Richtung des Produktionsfortschritts (siehe Pfeilrichtung) ist vor und hinter dem Reversier-Steckelgerüst 8 je ein Ofenhaspel 9, 10 angeordnet. Ein Ofenhaspel 9, 10 setzt sich aus einem Ofen mit einem Ofengehäuse 11, 12 und einer Haspeleinrichtung 13, 14 zum Auf- und Abwickeln des Walzbandes zum bzw. vom Coil zusammen. Mit der gestrichelten Linie 15, 16 ist der Umfang eines jeweils aufgewickelten Coils angedeutet. Zwischen einem jeweiligen Ofenhaspel 9, 10 und dem Steckelgerüst 8 ist jeweils ein Treiber 17, 18 mit jeweils zwei Treiberrollen angeordnet; d.h. es ist je ein Treiber auf der Zu- und Ablaufseite des Fertiggerüstes angeordnet. Mittels der jeweils am Ofenhaspel 9, 10 angeordneten Ofenführung 19a, b wird der auslaufende bzw. nicht aktive Ofenhaspel geschlossen bzw. der Ofenhaspel, in den eingewickelt wird, geöffnet. Zwischen einem dieser Treiber, hier beispielsweise dem Treiber 17, und dem Steckel-Walzgerüst 8 ist eine einzige, im Verhältnis zu den bekannten Vorband-Schopfscheren (vgl. 7 in Fig. 2) klein ausgelegte Schopfschere 20 auf der Zulaufseite des Steckel-Walzgerüsts 8 angeordnet. Die abgeschnittenen Schöpfenden können über eine geeignete Sammelvorrichtung abgeführt werden.

Mit Hilfe dieser Schere 20 werden das vordere und hintere Ende des im Walzprozess befindlichen Bandes geschopft, d.h. ohne wesentliche Stillstandzeiten des warmen Bandes und den damit verbundenen Band-Temperaturverlusten, die das Erreichen von dünnen Banddicken von etwa 2 mm oder weniger behindem.

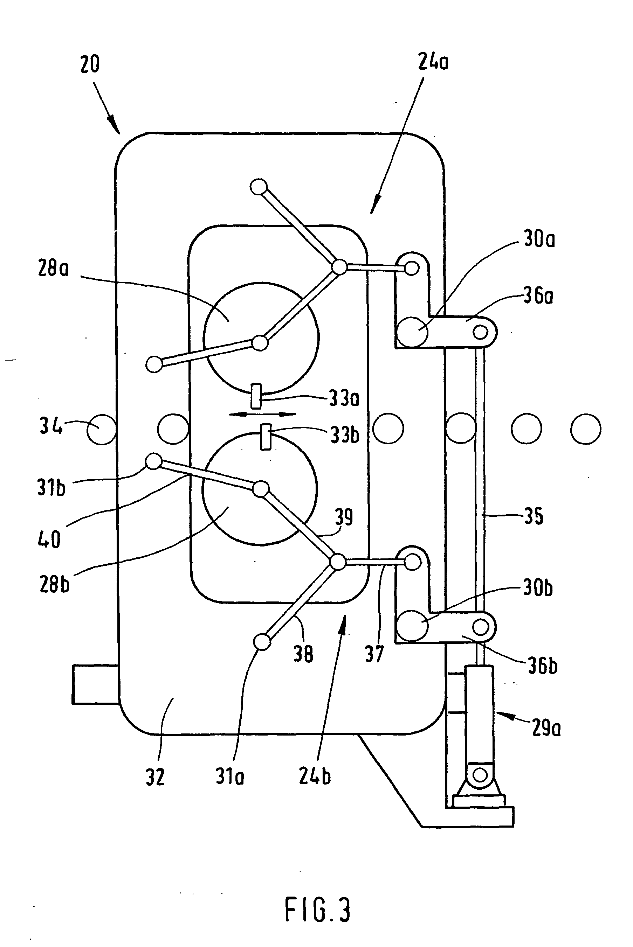

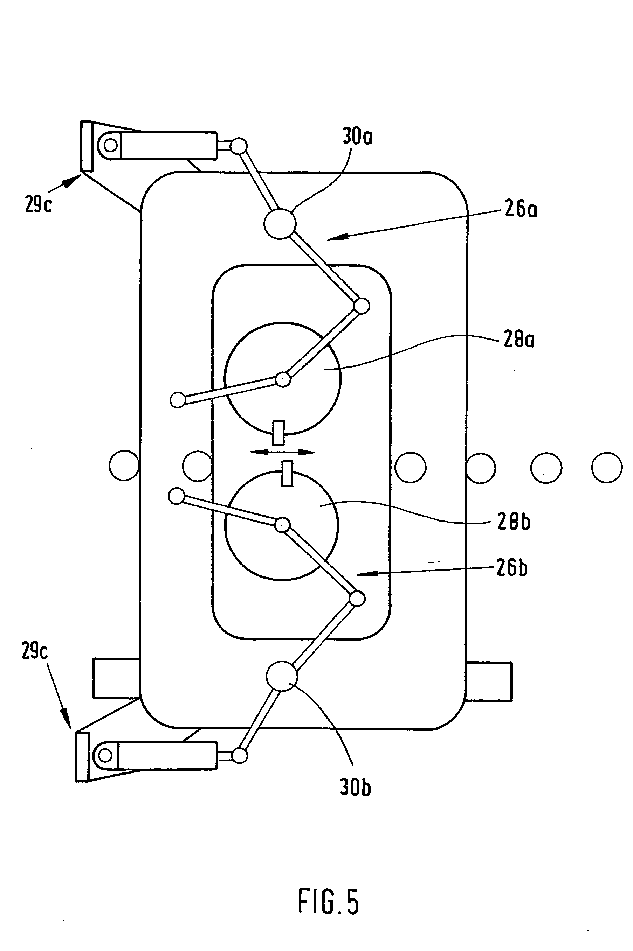

Der Einsatz der Schere 20 ist vorgesehen wie nachfolgend beschrieben, wobei auf die weiteren Fig., die eine Trommelmesser-Schopfschere zeigen und anschließend konkreter erläutert werden, bereits Bezug genommen wird: Das Band läuft beispielsweise nach mehreren Walzstichen aus dem Reversier-Steckelgerüst 8 in Richtung des Ofenhaspels 9. Die Ausbildung bzw. Form des Bandendes (Zunge) macht einen Schopfschnitt notwendig, um den Einfädel- und Aufwickelprozess im Ofenhaspel ohne Störung durchzuführen. Hierzu wird die Schopfschere aktiviert, d.h. die Messertrommeln Fig. 3-6; 28 a,b werden zusammengefahren und deren Rotationsgeschwindigkeit wird der jeweiligen Band-Walzgeschwindigkeit angepasst.

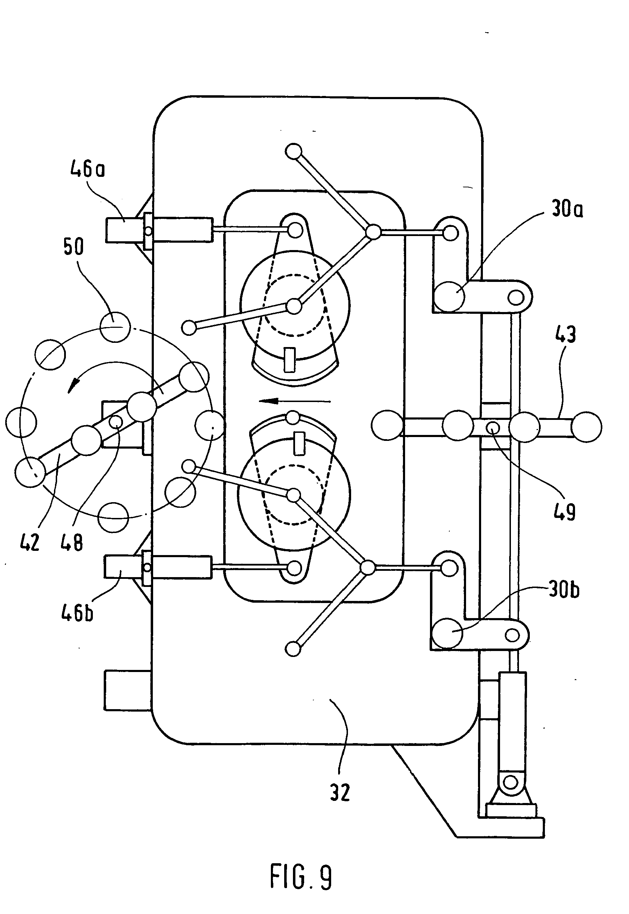

Die Einrichtungen zur Schopfendenableitung, in diesem Fall der Schwenkrollgang (Fig. 9) 42 wird justiert. Der Regelkreis Bandlauf-Bandendenform führt die Messerstellung der rotierenden Messertrommeln und den vorgesehenen Schnittpunkt am Bandende zusammen. Der Schopfschnitt erfolgt. Anschließend werden die Messertrommeln 28a, b (Fig. 3-6) wieder auseinandergefahren und das geschopfte Band wird mit Hilfe des durchgeschwenkten Rollgangs 42 (Fig. 9) zum Treiber 17 und ohne Halt in den Ofenhaspel 9 geführt. Dort wird das Walzband so weit aufgewickelt bis das hintere Bandende annähernd die Position des Treibers erreicht.

Das Walzband kommt kurz zum Stillstand und ist bereit für den folgenden Walzstich in entgegengesetzter, d.h. reversierter Richtung.

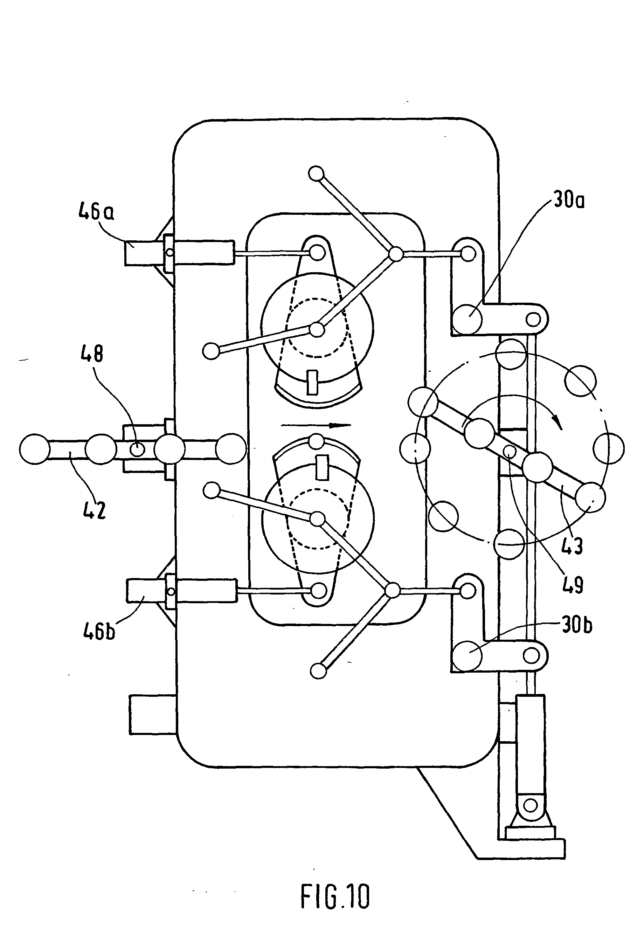

Zu diesem Zeitpunkt sind die Messertrommeln 28a, b (Fig. 3-6) der Schere 20 bereits wieder zusammengefahren und drehen sich in entgegengesetzter Richtung als zuvor. Der Schwenkrollgang 43 (Fig. 10) wird justiert. Wiederum erfolgt unter Vorgabe des Regelkreises Bandlauf-Bandendenform die Synchronisation der Messertrommel-Rotation und der Messerposition mit dem Schnittpunkt am Bandende. Der Schopfschnitt am Bandende wird durchgeführt und das Schopfende wird abgeleitet. Das geschopfte Band wird mit Hilfe des Rollgangs 43 (Fig. 10) in Richtung des Steckel-Reversiergerüstes transportiert und dort weiter gewalzt.

Um den Transport des Bandes auf dem Ständerrollgang 21a, 21b in der Nähe des Steckel-Walzgerüstes 8 zu vergleichmäßigen, sind jeweils Seitenführungen 22a, b vorgesehen, die auf die eingezeichnete Erstreckung nicht beschränkt sind. Auf der der Schopfschere 20 gegenüberliegenden Seite ist zwischen dem Steckelwalzgerüst 8 und dem zweiten Treiber 18 ein Bandmessgerät 23 angeordnet, welches in einen Regelkreis zur Regelung des Steckel-Walzgerüstes 8 bzw. des Walzspaltes eingebunden sein kann. Zudem geben die hiermit erfassten Werte Aufschluss über die Beschaffenheit des Bandkopfes und Bandendes, die in die Regelung der Schopfschere 20 eingehen können, um beispielsweise die fliegende Schopfschere 20 entsprechend notwendiger Schopflängen zu aktivieren.

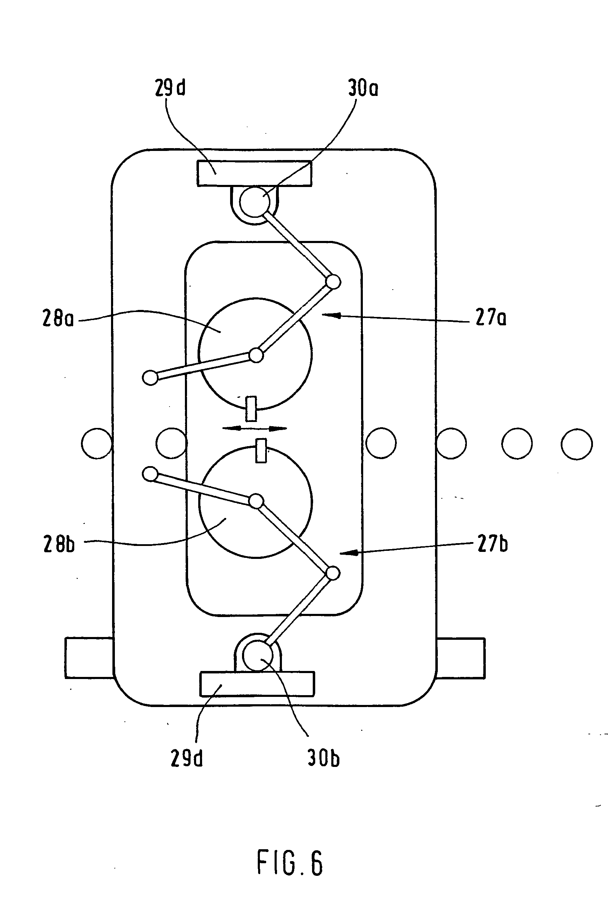

Die Fig. 3 bis 6 zeigen jeweils eine Trommelmesser-Schopfschere 20 mit über ein oberes und unteres Kniehebelsystem 24, 25, 26, 27a, b jeweils anstellbaren oberen und unteren Messertrommeln 28a, b. Es sind vier verschiedene Ausführungsformen von Antrieben 29a-d der Kniehebelsysteme zur Anstellung der Messertrommeln 28a, b dargestellt. Allen vier Ausführungsformen, auf die die Erfindung nicht beschränkt ist, ist gemeinsam, dass der Antrieb der Kniehebelsysteme von einer Scherenseite bzw. bei der Ausführungsform nach der Fig. 6 von oben und unten erfolgt. Die Übertragung des Antriebsmomentes auf das Kniehebelsystem der anderen Scherenseite bzw. Messertrommelseite wird mittels einer entsprechend dimensionierten Gleichlaufwelle 30a, b übernommen. Es sei bemerkt, dass die Fig. nur das Prinzip de verschiedenen Scherenvarianten zeigen. Die Hebelverhältnisse und die daraus resultierenden erforderlichen Winkellageveränderungen sind nicht korrekt dargestellt.

Im Einzelnen zeigt Fig. 3 einen Scherenrahmen 32 mit einer oberen und einer unteren Messertrommel 28a, b mit einem daran angeordneten oberen und unteren Messer 33a,b. Zwischen den Messertrommeln 28a, b wird das Band über einen Rollgang 34 geführt. Das Antriebsmoment der jeweiligen Kniehebelsysteme 24a, b über eine hydraulisch betätigte Verbindungstange 35 wird über eine obere und untere Gleichlaufwelle 30a, b auf die andere Scherenseite übertragen. Die Kniehebelsysteme 24a, b setzen sich aus einem mit den Gleichlaufwellen 30a, b verbundenen Winkelhebeln 36a, b, den Schubstangen 37, weiteren Hebeln 38-39 und den Führungshebeln 40 zusammen.

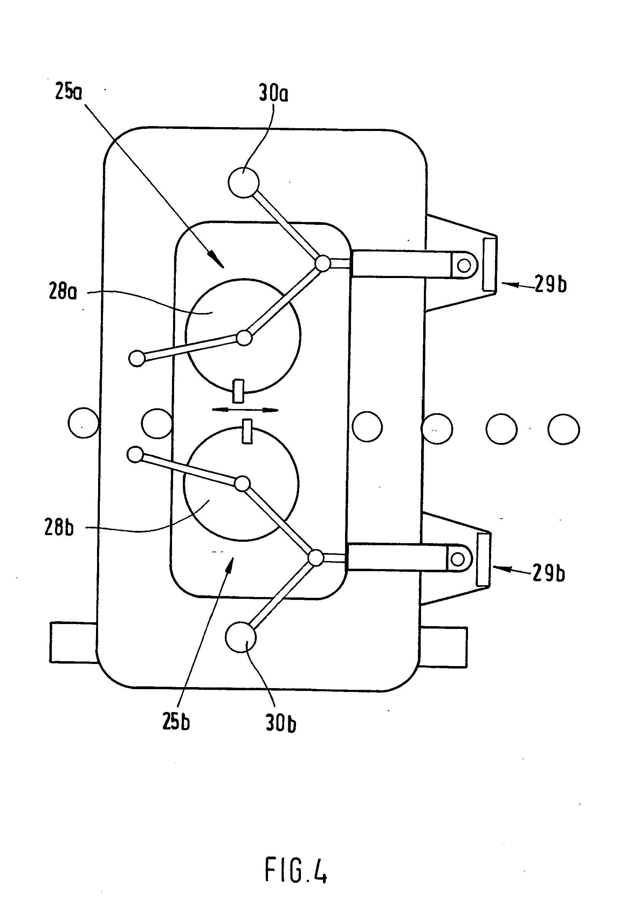

Im Gegensatz hierzu weisen die Antriebe 29 b,c und d nach den Fig. 4, 5 und 6 zwei entkoppelte Antriebseinheiten auf. Bei der Ausführungsform nach der Fig. 6 ist der Antrieb durch zwei Hydraulik-Schwenkantriebe (29d) realisiert, die auf jeweils eine Gleichlaufwelle 30a, b zwischen beiden Scherenseiten einwirken und die Anstellung der oberen und unteren Messertrommel 28a, b über die Kniehebel bewirken.

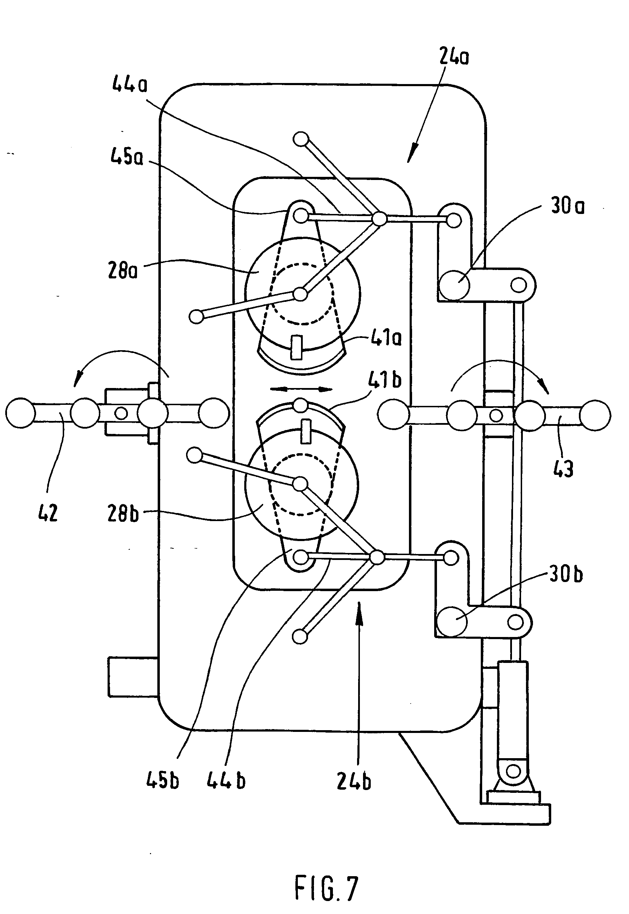

Mit den Fig. 7 bis 10 ist die Ausbildung der Schopfschere mit Wärmeschutzschirmen 41 a, b sowie deren Schwenkantrieb und die Anordnung und Funktionsweise eines neuartigen Rollgangs (42, 43) gezeigt.

Die Wärmeschutzschirme 41a, b sind auf der Achse der Messertrommeln 28a, b gelagert und im eingeschwenkten Zustand, d.h. im Walzbetrieb, in den Fig. gezeigt. Nach der Ausführungsform der Fig. 7 greift ein Hebel 44a, b des Kniehebelsystems 24a an das vom Band wegweisende Ende 45a, b des Wärmeschutzschirmes 41a, b, so dass der Wärmeschutzschirm 41a, b über den Antrieb des Kniehebelsystems 24a, b verschwenkt wird.

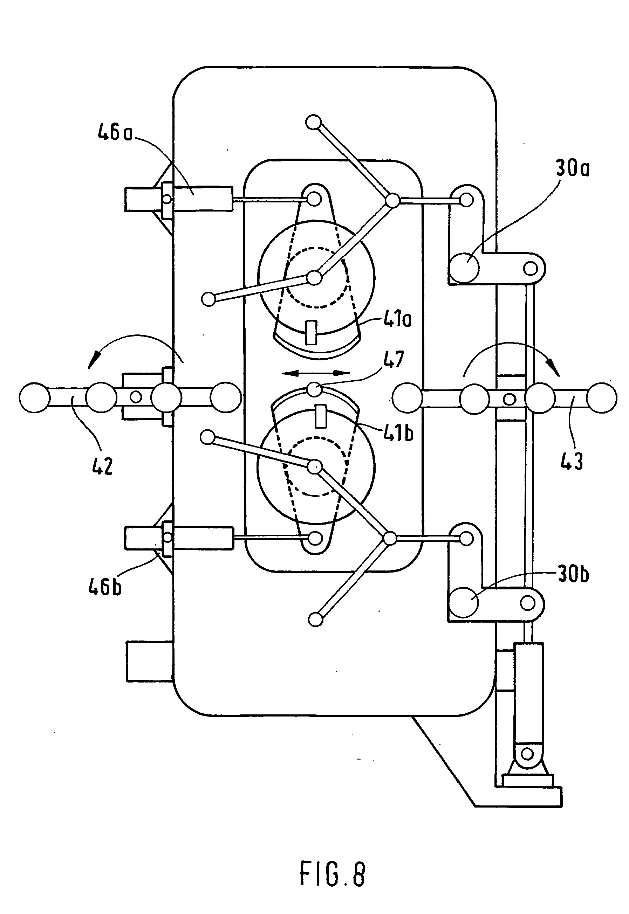

Bei der Ausführungsform nach der Fig. 8 sind diese Antriebe entkoppelt. Für das Verschwenken der Wärmeschutzschirme 41a, b sind zwei separate Antriebseinheiten 46a, b in Form von Hydraulikzylindern vorgesehen. Im Gegensatz zum Kniehebelsystem 24a, b kann über die Kolbenstange der separaten Antriebssysteme 46 a, b der Wärmeschutzschirm 41a, b sowohl nach links als auch nach rechts verschwenkt werden und ein Einfädeln des Bandes unterstützen.

Um eine schädliche Wärmebelastung der Messertrommeln 28a, b zu reduzieren, werden diese von außen mit Wasser gekühlt. Durch die gebogene, zur Trommelachse konkave, Form des oberen Wärmeschutzschirmes 41a wird das Kühlwasser aufgefangen.

Der untere Wärmeschutzschirm 41b weist eine vorzugsweise angetriebene Tragrolle 47 auf, die ein Durchhängen des Bandes beim Durchlaufen durch die Schere 20 verhindert. Bei eingeschwenktem Wärmeschutzschirm 41b ist die Tragrolle 47 und deren Antrieb in den Rollgang für das Band integriert.

Der Rollgang selbst setzt sich aus zwei Rollgangeinheiten 42, 43 zusammen, die am Eingang und am Ausgang des Scherenrahmens 32 angeordnet sind. Eine solche Rollgangeinheit 42, 43 ist unabhängig von dem weiteren Rollgang als Schwenkrollgang ausgebildet und weist ein zentrales Schwenklager 48, 49 und bei dieser Ausführungsform vier weitere Rollen auf, auf die die Erfindung nicht beschränkt ist.

Mit Hilfe der Fig. 9 und 10 wird die Funktionsweise der Schwenkrollgänge erläutert. Bei einem Band mit einer Förderrichtung von links nach rechts, dessen Bandende geschopft wird, wird der Schwenkrollgang bzw. die Rollgangeinheit 42, die hinter den Messertrommeln 28a, b liegt, aus der Horizontalen in Linksrichtung so nach oben verschwenkt, dass das abgeschnittene Schrottstück über den verschwenkten Rollgang aus dem Scherenbereich herausfallen kann. Anschließend wird der Schwenkrollgang weiter in Linksrichtung wieder in die Horizontale gebracht bzw. durchgeschwenkt, wie durch die grau gekennzeichneten Rollen 50 verdeutlicht, damit der nachfolgende Bandkopf wieder unterstützt wird. Fig. 10 zeigt die Stellung des Schwenkrollgangs bzw. der Rollgangeinheit 43 bei einem Schopfschnitt nach hinten (rechts). Danach erfolgt ein Durchschwenken des Schwenkrollgangs, damit der nachfolgende Bandkopf wieder unterstützt wird. Mit Hilfe der Schwenkrollgänge bzw. der Rollgangeinheiten 42, 43 wird erreicht, dass ein Schopfende das später wieder durchlaufende Material nicht behindert, sondern wirkungsvoll aus dem Rollgang entfernt werden kann.

### Bezugszeichenliste:

- 1: Reversiergerüst
- 2: Steckel-Fertiggerüst
- 3: Zwischenrollgang
- 4: Haspelofen
- 5: Haspelofen
- 6: Endeinheit, Kühlstrecke 6a
- 7: Vorband-Schopfschere
- 8: Steckel-Walzgerüst
- 9: Ofenhaspel
- 10: Ofenhaspel
- 11: Ofengehäuse
- 12: Ofengehäuse
- 13: Haspeleinrichtung
- 14: Haspeleinrichtung
- 15: Umfang eines Coils
- 16: Umfang eines Coils
- 17: Treiber
- 18: Treiber
- 19: Ofenführung
- 20: Schopfschere
- 21: Ständerrollgang (21a, b)
- 22: Seitenführungen (22a, b)
- 23: Bandmessgerät
- 24: Kniehebelsystem
- 25: Kniehebelsystem
- 26: Kniehebelsystem

- 27: Kniehebelsystem
- 28: Messertrommeln (28a, b)
- 29: Antriebe (29a-d)
- 30: Gleichlaufwellen (30a, b)
- 31: Lagerstellen (31a, b)
- 32: Scherenrahmen
- 33: Messer (33a, b)
- 34: Rollgang
- 35: Kolbenstange
- 36: Kniehebel (36a, b)
- 37: Hebel
- 38: Hebel
- 39: Hebel
- 40: Hebel
- 41: Wärmeschutzschirm (40a, b)
- 42: schwenkbare Rollgangeinheiten
- 43: schwenkbare Rollgangeinheit
- 44: Hebel
- 45: Ende des Wärmeschutzschirmes
- 46: separate Antriebseinheit
- 47: Tragrolle
- 48: zentrales Schwenklager
- 49: zentrales Schwenklager

## Patentansprüche

1. Verfahren zum Warmwalzen von Bändern, wobei das Walzgut in einem Steckel-Walzgerüst (8) reversierend gewalzt wird und zwischen zwei Ofenhaspeln (9, 10), die jeweils zu einer Seite des Steckel-Walzgerüstes (8) angeordnet sind, mittels Treibern (17, 18) gefördert wird, die zwischen dem jeweiligen Ofenhaspel (9, 10) und dem Steckel-Walzgerüst (8) angeordnet sind, wobei das Walzgut geschopft wird.
**dadurch gekennzeichnet,**
**dass** das Band während des Reversierwalzens im Steckel-Walzgerüst (8) mittels einer einzigen fliegenden Schopfschere (20), die zwischen einem Treiber (17) und dem Steckel-Walzgerüst (8) angeordnet ist, geschopft wird.

2. Verfahren nach Anspruch 1,
**dadurch gekennzeichnet,**
**dass** die geschopften Bänder in dem Steckel-Walzgerüst (8) auf Endbanddicken von 2 mm und kleiner gewalzt werden.

3. Anlage zum Warmwalzen von Bändern mit einem Reversier-Steckel-Walzgerüst (8), dem beidseitig jeweils ein Ofenhaspel (9, 10) und zwischen Ofenhaspel (9, 10) und Steckel-Walzgerüst (8) ein Treiber (17, 18) zugeordnet ist, sowie mit einer Schere zum Schopfen, insbesondere zur Durchführung des Verfahrens nach einem der Ansprüche 1 oder 2,
**dadurch gekennzeichnet,**
**dass** eine einzige fliegende Schopfschere (20) zwischen einem Treiber (17) und dem Steckel-Walzgerüst (8) angeordnet ist.

4. Anlage nach Anspruch 3,
**dadurch gekennzeichnet,**
**dass** die Schopfschere (20) eine Trommelmesser-Schopfschere mit einer sowohl oberen als auch unteren anstellbaren Messertrommel (28a, b) zum fliegenden Schnitt des Bandmaterials ist, wobei die jeweilige Messertrommel (28a, b) zwischen einer vom Bandmaterial entfernten Position während des Walzbetriebs und einer Schneidposition verstellbar ist.

5. Anlage nach Anspruch 4,
**dadurch gekennzeichnet,**
**dass** in den Zwischenraum zwischen der jeweiligen Messertrommel (28a, b), die in die entfernte Position verfahren ist, und dem beabstandeten Bandmaterial ein Wärmeschutzschirm (41a, b) einschwenkbar ist.

6. Anlage nach Anspruch 5,
**dadurch gekennzeichnet,**
**dass** der untere Wärmeschutzschirm (41b) der unteren Messertrommel (28b) mit mindestens einer Tragrolle (47) für das Bandmaterial ausgerüstet ist, die im eingeschwenktem Zustand des Wärmeschutzschirms (41b) ein Durchhängen des Bandes beim Durchlauf verhindern.

7. Anlage nach einem der Ansprüche 5 bis 6,
**dadurch gekennzeichnet,**
**dass** eine Kühlvorrichtung vorgesehen ist zur Kühlung der jeweiligen Messertrommeln mit einem Kühlmedium, wobei der obere Wärmeschutzschirm (41a) der oberen Messertrommel (28a) gleichzeitig als Kühlmittel-Auffangrinne und Schutz des Bandmaterials dient.

8. Anlage nach einem der Ansprüche 5 bis 7,
**dadurch gekennzeichnet,**
**dass** der jeweilige schwenkbare Wärmeschutzschirm (41a, b) auf der Achse der jeweiligen Messertrommel (28a, b) gelagert ist.

9. Anlage nach einem der Ansprüche 4 bis 8,
**dadurch gekennzeichnet,**
**dass** die Messertrommeln (28a, b) mittels eines oberen und unteren Kniehebelsystems (24-27a, b) zwischen ausgeschwenkter Walzposition und angestellter Schneidposition verschwenkbar sind.

10. Anlage nach Anspruch 9,
**dadurch gekennzeichnet,**
**dass** das obere und untere Kniehebelsystem (24-27a, b) in einem geschlossenen Scherenrahmen (32) zusammengefasst ausgebildet sind.

11. Anlage nach einem der Ansprüche 3 bis 10,
**dadurch gekennzeichnet,**
**dass** ein unmittelbar neben der Schopfschere (20) angrenzender Rollgangbereich zur Förderung des Bandmaterials durch die Schere durch zwei, jeweils unabhängige schwenkbare Rollgangeinheiten (42, 43) ausgebildet ist, wobei zur Schopfendenableitung die jeweilige Rollgangeinheit (42, 43) aus der Horizontalen so verschwenkbar ist, dass das abgeschnittene Schopfende ohne Behinderung durch die Rollgangeinheit (42, 43) frei nach unten fallen kann und dass anschließend die Rollgangeinheit (42, 43) weiter unter Beibehalten der vorherigen Schwenkrichtung bis zur Horizontalen verschwenkbar ist.

## Claims

1. Method of hot-rolling strips, wherein the rolling stock is rolled in reversing manner in a Steckel roll stand (8) and conveyed between two oven reeling devices (9, 10), which are arranged on either side of the Steckel roll stand (8), by means of drivers (17, 18) arranged between the respective oven reeling device (9, 10) and the Steckel roll stand (8), wherein the rolling stock is cropped, **characterised in that** the strip during reversing rolling in the Steckel roll stand (8) is cropped by means of a single cantilever-mounted cropping cutter (20) arranged between a driver (17) and the Steckel roll stand (8).

2. Method according to claim 1, **characterised in that** the cropped strips are rolled in the Steckel roll stand (8) to final strip thicknesses of 2 millimetres and smaller.

3. Plant for hot-rolling strips by a reversing Steckel roll stand (8), with which are associated on both sides a respective oven reeling device (9, 10) and, between oven reeling device (9, 10) and Steckel roll stand (8), a driver (17, 18), as well as with a cutter for cropping, particularly for carrying out the method according to one of claims 1 and 2, **characterised in that** a single cantilever-mounted cropping cutter (20) is arranged between a driver (17) and the Steckel roll stand (8).

4. Plant according to claim 3, **characterised in that** the cropping cutter (20) is a drum knife cropping cutter with a knife drum (20a, b), which is adjustable not only at the top, but also at the bottom, for overhung cutting of the strip material, wherein the respective knife drum (28a, b) is adjustable between a position spaced from the strip material during the rolling operation and a cutting position.

5. Plant according to claim 4, **characterised in that** a heat protection screen (41a, b) is pivotable into the intermediate space between the respective knife drum (28a, b), which is moved into the spaced position, and the spaced strip material.

6. Plant according to claim 5, **characterised in that** the lower heat protection screen (41b) of the lower knife drum (28b) is equipped with at least one support roller (47) for the strip material, which in the pivoted-in state of the heat protection screen (41b) prevents sagging of the strip during transit.

7. Plant according to one of claims 5 to 6, **characterised in that** a cooling device is provided for cooling the respective knife drums by a cooling medium, wherein the upper heat protection screen (41a) of the upper knife drum (28a) simultaneously serves as a coolant collecting channel and protection of the strip material.

8. Plant according to one of claims 5 to 7, **characterised in that** the respective pivotable heat protection screen (41a, b) is mounted on the axle of the respective knife drum (28a, b).

9. Plant according to one of claims 4 to 8, **characterised in that** the knife drums (28a, b) are pivotable by means of an upper and lower toggle lever system (24 to 27a, b) between a pivoted-out rolling position and an adjusted cutting position.

10. Plant according to claim 9, **characterised in that** the upper and lower toggle lever systems (24 to 27a, b) are constructed to be combined in a closed cutter frame (32).

11. Plant according to one of claims 3 to 10, **characterised in that** a roller path region, which adjoins directly adjacent to the cropping cutter (20), for conveying the strip material through the cutter is formed by two respectively independently pivotable roller path units (42, 43), wherein for conducting away the cropped ends the respective roller path unit (42, 43) is so pivotable out of the horizontal that the cut-off cropped end can freely fall down without obstruction through the roller path unit (42, 43) and that subsequently the roller path unit (42, 43) is pivotable back to the horizontal with maintenance of the previous pivot direction.

## Revendications

1. Procédé de laminage à chaud de feuillards, dans lequel les produits à laminer sont laminés de façon réversible dans une cage de laminoir de Steckel (8) et transportés entre deux enrouleurs de four (9, 10), agencés de part et d'autre de la cage de laminoir de Steckel (8), au moyen d'entraîneurs (17, 18) qui sont agencés entre l'enrouleur de four respectif (9, 10) et la cage de laminoir de Steckel (8), les produits à laminer étant éboutés,
**caractérisé en ce que**
le feuillard est ébouté pendant le laminage réversible dans la cage de laminoir de Steckel (8) au moyen d'une seule cisaille volante à ébouter (20) qui est agencée entre l'entraîneur (17) et la cage de laminoir de Steckel (8).

2. Procédé selon la revendication 1,
**caractérisé en ce que**
les feuillards éboutés sont laminés dans la cage de laminoir de Steckel (8) à des épaisseurs finales de feuillard de 2 mm et moins.

3. Installation de laminage à chaud de feuillards, comportant une cage de laminoir de Steckel réversible (8) à laquelle sont associés, de part et d'autre, un enrouleur de four respectif (9, 10), et entre l'enrouleur de four (9, 10) et la cage de laminoir de Steckel (8) un entraîneur (17, 18), et comportant une cisaille à ébouter, en particulier pour mettre en oeuvre le procédé selon l'une des revendications 1 ou 2,
**caractérisée en ce que**
une seule cisaille volante à ébouter (20) est agencée entre un entraîneur (17) et une cage de laminoir de Steckel (8).

4. Installation selon la revendication 3,
**caractérisée en ce que**
la cisaille à ébouter (20) est une cisaille à ébouter à couteaux sur tambour, comportant aussi bien un tambour à couteaux supérieur qu'un tambour à couteaux inférieur approchables (28a, b) pour la coupe à la volée du matériau en feuillard, le tambour à couteaux respectif (28a, b) étant déplaçable entre une position éloignée du matériau en feuillard pendant le fonctionnement de laminage et une position de coupe.

5. Installation selon la revendication 4,
**caractérisée en ce que**
un écran de protection thermique (41a, b) est susceptible d'être pivoté dans l'espace intermédiaire entre le tambour à couteaux respectif (28a, b), déplacé dans la position éloignée, et le matériau en feuillard espacé.

6. Installation selon la revendication 5,
**caractérisée en ce que**
l'écran de protection thermique inférieur (41b) du tambour à couteaux inférieur (28b) est muni d'au moins un rouleau porteur (47) pour le matériau en feuillard, qui, dans l'état engagé de l'écran de protection thermique (41b), empêchent un fléchissement du feuillard pendant le passage.

7. Installation selon l'une des revendications 5 et 6,
**caractérisée en ce que**
il est prévu un dispositif de refroidissement pour refroidir les tambours à couteaux respectifs par un réfrigérant, l'écran de protection thermique supérieur (41a) du tambour à couteaux supérieur (28a) servant simultanément de goulotte de collecte de réfrigérant et de protection pour le matériau en feuillard.

8. Installation selon l'une des revendications 5 à 7,
**caractérisée en ce que**
l'écran de protection thermique pivotant respectif (41a, b) est monté sur l'axe du tambour à couteaux respectif (28a, b).

9. Installation selon l'une des revendications 4 à 8,
**caractérisée en ce que**
les tambours à couteaux (28a, b) sont mobiles en pivotement entre une position de laminage sortie et une position de coupe approchée, au moyen de systèmes de leviers à genouillère (24 - 27a, b) supérieur et inférieur.

10. Installation selon la revendication 9,
**caractérisée en ce que**
les systèmes de leviers à genouillère (24 - 27a, b) supérieur et inférieur sont réalisés réunis dans un cadre de cisaille fermé (32).

11. Installation selon l'une des revendications 3 à 10,
**caractérisée en ce que**
il est prévu une zone de voie à rouleaux adjacente directement à côté de la cisaille à ébouter (20) pour transporter le matériau en feuillard à travers la cisaille par deux unités de voie à rouleaux (42, 43) pivotantes indépendantes respectives, et pour évacuer les extrémités éboutées, l'unité de voie à rouleaux respective (42, 43) est susceptible de pivoter hors de l'horizontale, de telle sorte que l'extrémité éboutée coupée peut tomber vers le bas librement et sans obstacle par l'unité de voie à rouleaux (42, 43), et **en ce qu'**ensuite l'unité de voie à rouleaux (42, 43) peut pivoter jusqu'à l'horizontale tout en maintenant la direction de pivotement précédente.
